# EUROPÄISCHE PATENTSCHRIFT

(11) **EP 1 845 299 B1**
(45) Veröffentlichungstag und Bekanntmachung des Hinweises auf die Patenterteilung: **04.03.2009**
(21) Anmeldenummer: 07007336.6
(22) Anmeldetag: 10.04.2007
(51) Int. Cl.: F16L 37/14, F16L 25/00, H02G 3/06

(54) **Anschlussvorrichtung für ein Rohr**
Connecting device for a pipe
Dispositif de raccordement pour un tuyau

(30) Priorität: 12.04.2006 EP 06007696
(43) Veröffentlichungstag der Anmeldung: 17.10.2007
(73) Patentinhaber: EMS-CHEMIE AG, 7013 Domat/Ems (CH)
(72) Erfinder: Jeltsch, Thomas, 7013 Domat/Ems (CH)
(74) Vertreter: Lauer, Joachim

(56) Entgegenhaltungen:
- EP-A- 1 028 282
- WO-A-02/02983
- DE-A1- 10 337 381
- US-A- 3 606 402
- US-B1- 6 179 347

## Beschreibung

### TECHNISCHES GEBIET

Die vorliegende Erfindung betrifft eine Anschlussvorrichtung für ein Rohr mit ringförmiger Aussennut, welche ein Gehäuse aufweist, in welches das Rohr einsteckbar und darin durch ein Sperrelement arretierbar ist, wobei das Sperrelement in eine ringförmige innennut des Gehäuses und in die ringförmige Aussennut des Rohres eingreift und sich durch eine Öffnung im Gehäuse in einer zu den Ringnuten tangentialen Richtung aus diesem herausziehen lässt und wobei das Sperrelement in der Innennut des Gehäuses vormontierbar ist, in dieser Stellung unter elastischer Auslenkung ein Einstecken des Rohres in das Gehäuse erlaubt und dabei in die Aussennut des Rohres einrastet.

### STAND DER TECHNIK

Anschlussvorrichtungen der genannten Art sind z.B. bekannt aus DD 252 647 A5, DE 29 43 571 C2, DE 91 06 278.0 U1 sowie DE 295 18 192 U1. Bei den bekannten Ausführungsformen muss das Rohr in das Gehäuse eingesteckt werden, bevor das Sperrelement in das Gehäuse eingeschoben werden kann. Das Sperrelement bildet bei der Herstellung des Anschlusses dadurch ein separates Teil, das separat gehandhabt werden muss.

Aus DE 29 08 337 C2, DE 31 04 518 C2, EP 0 509 970 A1, DE 299 80 147 U1 und DE 20 2004 013 983 U1 sind Anschlussvorrichtungen für Wellrohre bekannt, bei denen ebenfalls ein bei der Montage separat zu handhabendes Sperrelement vorhanden ist.

Bei den Anschlussvorrichtungen der DE 29 08 337 C2, DE 299 80 147 U1 und DE 20 2004 013 983 U1 ist das Sperrelement u-förmig, wird von der Seite her In das Gehäuse eingesteckt und nach Art einer Klammer auf das Wellrohr aufgeschoben. Indem das Sperrelement am Gehäuse und am Wellrohr jeweils nur lokal angreift, ergeben sich unter Zug an den Angriffsstellen konzentrierte Spannungen, was die Anschlussvorrichtungen nicht besonders belastbar macht.

Bei den Vorrichtungen gemäss DE 31 04 518 C2 und EP 0 509 970 A1 umgreift das Sperrelement das Wellrohr nach Art einer Schelle, so dass sich hier prinzipiell eine günstigere Kraftübertragung ergibt. Bei der Vorrichtung gemäss DE 31 04 518 C2 umgreift das Sperrelement allerdings nicht nur das Wellrohr, sondern auch das Gehäuse von aussen, wodurch ein äusserer Verschluss für das Sperrelement zusätzlich erforderlich ist.

Bei der Vorrichtung gemäss EP 0 509 970 A1 umgreift das Sperrelement nur das Wellrohr und wird mit diesem zusammen in das Gehäuse eingeschoben. Die Arretierung des Sperrelements im Gehäuse erfolgt dann Ober Rastarme am Sperrelement, die in durchgehende Ausnehmungen in der Gehäusewand eingreifen. Die Rastarme bzw. die Gehäuseausnehmungen sind in Umfangsrichtung relativ schmal, so dass sich auch hier wieder eine eher ungünstige Spannungskonzentration bei Zugbelastung ergibt.

Bei der Anschlussvorrichtung für ein Wellrohr gemäss EP 0 634 699 B1 ist das Sperrelement vormontierbar und bildet dadurch während der Montage kein separates Teil. Das Wellrohr kann einfach in das Gehäuse eingesteckt werden. Das Sperrelement umgreift das Wellrohr auch im wesentlichen allseitig. Gegenüber dem Gehäuse ist es jedoch nur wie bei EP 0 509 970 A1 durch in lokale Ausnehmungen des Gehäuses eingreifende Rastarme arretiert, so dass sich auch hier wieder ungünstige Spannungskonzentrationen unter Zugbelastung ergeben.

WO 2006/007744 zeigt Anschlussvorrichtungen für Wellrohre mit einem Gehäuse, wobei auf ein Sperrelement als separates Teil überhaupt verzichtet ist. Das Gehäuse selbst ist dafür mit über seinen Umfang verteilten Rastarmen versehen. Durch die Verteilung der Rastarme über den Umfang ist die Vorrichtung prinzipiell besser für höhere Ausreisskräfte geeignet, obwohl zwischen den Rastarmen relativ grosse Lücken für den Durchgang von Haltestegen vorhanden sind. Durch die Anformung der Rastarme direkt am Gehäuse ist deren Eingriff In eine Ringnut eines eingeschobenen Wellrohrs jedoch nicht mehr in einfacher Weise aufzuheben. Als eine Möglichkeit, die Verrastung zu lösen, wird vorgeschlagen, an den Rastarmen aussenseitig Ösen anzuformen. Um die Sperrwirkung der Rastarme aufzuheben, muss jedoch ein spezielles Spreizwerkzeug an allen Ösen gleichzeitig angreifen.

Eine Anschlussvorrichtung der eingangs genannten Art ist aus der US 6,179,347 B1 bekannt. Bei der bekannten Vorrichtung ist das Sperrelement nicht gesichert, so dass es sich in der Nut bewegen und sich im ungünstigsten Fall sogar ganz aus dem Gehäuse herausdrehen kann, insbesondere wenn das darin eingesteckte Rohr gedreht und das Sperrelement durch Reibung mitgedreht wird. Ein allmähliches Herausbewegen des Sperrelements aus dem Gehäuse ist ggf. auch unter dem Einfluss von Vibrationen möglich, was vor allem bei einer Rohrinstallation an einem Motor zu besorgen ist. In der US 6,179 347 B1 wird als Stand der Technik zwar auch ein gesichertes Sperrelement beschrieben, doch ist dieses nicht vormontierbar und durch eine feste Montage in Form einer Verschraubung gesichert, die bei jedem Herstellen oder Lösen der Anschlussvorrichtung aufwändig montiert bzw. demontiert werden muss. Die als Spezialteil in Form einer Schraubkappe ("cap screw") ausgebildete Sicherungsschraube steht nach aussen über das Gehäuse über und stellt wie das Sperrelement ein separates Teil dar, das separat gehandhabt werden muss.

### DARSTELLUNG DER ERFINDUNG

Der Erfindung liegt die Aufgabe zugrunde, eine Anschlussvorrichtung der eingangs genannten Art für ein Rohr mit ringförmiger Aussennut anzugeben, welche ohne zusätzlichen Montageaufwand sicher gegen ungewolltes Lösen, bei Bedarf jedoch einfach lösbar ist.

Gelöst wird diese Aufgabe durch eine Anschlussvorrichtung gemäss Anspruch 1. Die erfindungsgemässe Anschlussvorrichtung weist demnach ein Gehäuse auf, in welches das Rohr einsteckbar und darin durch ein Sperrelement arretierbar ist. Das Sperrelement greift hierzu in eine ringförmige Innennut des Gehäuses und in die ringförmige Aussennut des Rohres ein. Durch eine Öffnung im Gehäuse lässt es sich in einer zu den Ringnuten tangentialen Richtung aus diesem herausziehen. Das Sperrelement ist in der Innennut des Gehäuses vormontierbar und erlaubt in dieser Stellung unter elastischer Auslenkung ein Einstecken des Rohres in das Gehäuse, wobei es In die Aussennut des Rohres einrastet. In dieser vormontierten Stellung ist das Sperrelement ausserdem durch Anschlagen an einer Kante und durch Umgreifen einer Kante verdrehfest im Gehäuse angeordnet und gesichert.

Bei dem Rohr kann es sich um ein beliebiges Rohr, einen Rohrstutzen eines Behälters oder einen rohrförmigen Abschnitt eines Rohrkonnektors handeln, das/der mit mindestens einer äusseren Ringnut versehen ist. Insbesondere könnte es sich bei dem Rohr um ein Wellrohr handeln, das als solches durch die Wellungen bereits Ringnuten aufweist.

Bevorzugte Ausgestaltungen der Erfindung sind in den abhängigen Ansprüchen gekennzeichnet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Explosionsdarstellung einer erfindungsgemässen Anschlussvorrichtung;
- Fig. 2: in tellgeschnittener Darstellung das Gehäuse der Anschlussvorrichtung von Fig. 1 mit darin vormontiertem und verdrehfest angeordnetem und gesichertem Sperrelement sowie darin vormontierter Dichtung;
- Fig. 3: in teilgeschnittener Darstellung die Anschlussvorrichtung mit angeschlossenem Rohr;
- Fig. 4: eine erste alternative Ausführungsform eines Sperrelements;
- Fig. 5: eine zweite alternative Ausführungsform eines Sperrelements in teilgeschnittener Darstellung;
- Fig. 6: eine dritte alternative Ausführungsform eines Sperrelements;
- Fig. 7: schematisch in einem Schnitt die Art der Verrastung des Sperrelements von Fig. 6 mit einem Wellrohr;
- Fig. 8: eine vierte alternative Ausführungsform eines Sperrelements;
- Fig. 9: eine weitere Ausführungsform einer Anschlussvorrichtung in teilgeschnittener, wobei unter a) einer Version mit einem im Gegenuhrzeigersinn und unter b) eine Version mit einem im Uhrzeigersinn entfernbaren Sperrelemement dargestellt ist;
- Fig. 10: unter a) in einem Querschnitt das Gehäuse einer Ausführungsform einer Anschlussvorrichtung mit darin verdrehfest angeordnetem und gesichertem Sperrelement und unter b) schematisch in der Ansicht X die Art der Lösung der Sicherung durch Torsion;
- Fig. 11: die Ausführungsform von Fig. 10 a), wobei das Sperrelement jedoch einen Überstand gegenüber dem Gehäuse aufweist;
- Fig. 12: in teilgeschnittener Darstellung das Gehäuse und das Sperrelement von Fig. 10 a), wobei das Ende des Sperrelements mit einer Einführöffnung für ein ebenfalls dargestelltes Werkzeug versehen ist;
- Fig. 13: unter a) in einem Querschnitt das Gehäuse einer Ausführungsform einer Anschlussvorrichtung mit darin verdrehfest angeordnetem und gesichertem Sperrelement und unter b) schematisch in der Ansicht X die Art der Lösung der Sicherung durch seitliches Wegbiegen;
- Fig. 14: eine Ausführungsform entsprechend der von Fig. 13 jedoch mit alternativ gelöster Sicherung des Sperrelements gegen Verdrehen im Gehäuse;
- Fig. 15: eine Ausführungsform gemäss Fig. 14 a) jedoch mit einer zusätzlichen Hilfsvorrichtung zum Herausbewegen des Sperrelements aus dem Gehäuse; und
- Fig. 16: unter a) und b) jeweils perspektivische Darstellungen eines mäanderförmigen Sperrelements mit Rastnase und Einführöffnung für ein Werkzeug.

### WEGE ZUR AUSFÜHRUNG DER ERFINDUNG

In den einzelnen Figuren sind sich funktionell entsprechende Teile mit denselben Bezugszeichen versehen. Sofern gleichartige Teile mehrfach vorkommen, ist jeweils nur eines von ihnen bezeichnet.

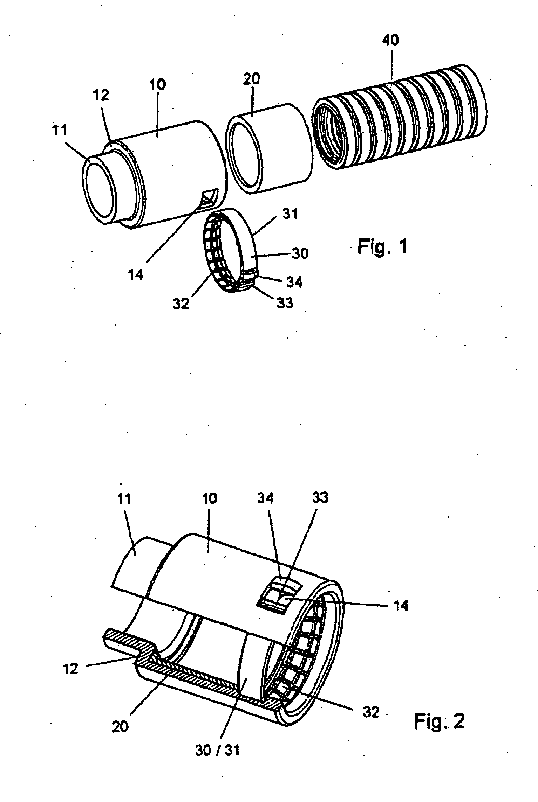

Die in Fig. 1 dargestellte Anschlussvorrichtung umfasst ein hülsenförmiges Gehäuse 10, eine ebenfalls hülsenförmige Dichtung 20, ein Sperrelement 30 und dient zum Anschluss eines Rohres, von dem ein Endabschnitt dargestellt und mit 40 bezeichnet ist.

Das Gehäuse weist ein Anschlussende 11 auf, das in Fig. 1 als ein im Durchmesser reduzierter Gehäuseabschnitt dargestellt ist, grundsätzlich aber auch jede andere zum Anschluss von Rohren, Schläuchen oder dergleichen geeignete Ausbildung haben könnte. Das Anschlussende 11 könnte auch mit einem Gewinde für einen Schraubanschluss versehen sein. Durch das im Durchmesser reduzierte Anschlussende 11 ergibt sich im Gehäuseinnenraum ein Absatz 12, der als Anschlag für die erwähnte Dichtung 20 sowie ggf. das Rohr 40 dient. Ein entsprechender Anschlag ist mit Vorteil auch dann vorhanden, wenn das Anschlussende 11 des Gehäuses in anderer als der dargestellten Weise ausgebildet sein sollte. Das Gehäuse 10 ist weiter mit einer ringförmigen Innennut 13 versehen, die über eine Öffnung 14 einen Ausgang nach aussen besitzt.

Die hülsenförmige Dichtung 20 besteht aus einem für Dichtungszwecke geeigneten weichelatischen Material und könnte zusätzlich mit Dichtlippen oder dergleichen versehen sein. Für Anwendungen, in denen es auf eine Dichtheit des Anschlusses nicht ankommt, kann die Dichtung auch weggelassen werden.

Das Sperrelement 30 bildet einen offenen Ring, ist jedoch so flexibel, dass es in eine gestreckte Form gebogen werden kann. Es weist an einem bandförmigen Grundelement 31 eine Vielzahl von unter einem schrägen Winkel nach innen abstehenden Rastarmen 32 auf. Das vordere 33 sowie das hintere Ende 34 des Sperrelements 30 ist mit einer Verdickung versehen.

Das Rohr 40 ist ein Wellrohr und weist dadurch abwechselnd Wellentäler 41 und Wellenberge 42 auf. Von aussen gesehen bilden die Wellentäler 41 im Wellrohr 40 ringförmig umlaufende Aussennuten.

Die Dichtung 20 und das Sperrelement 30 lassen sich im Gehäuse 10 vormontieren. Die Dichtung 20 wird hierzu als erstes in das Gehäuse 10 eingeschoben, bis sie am Gehäuseabsatz 12 anschlägt. Die Montage des Sperrelements 30 erfolgt vorzugsweise durch die seitliche Öffnung 14 des Gehäuses 10, durch die das Sperrelement tangential in die ringförmige Innennut 13 eingeschoben wird. Alternativ kann das Sperrelement analog der Montage der Dichtung durch die Hauptöffnung des Gehäuses montiert werden. Das Sperrelement wird so orientiert, dass die Rastarme 32 mit ihren freien Enden gegen das Innere des Gehäuses 10, d.h. gegen dessen Anschlussende gerichtet sind. Diese Orientierung kann z.B. durch eine unsymmetrische Ausbildung des Sperrelements und/oder der Öffnung 14 erzwungen und sichergestellt werden. Das Sperrelement 30 wird so weit eingeschoben, bis sein verdicktes hinteres Ende 34 an der in Einschubrichtung vorderen Kante der Öffnung 14 anschlägt. Das ebenfalls etwas verdickte vordere Ende 33 des Sperrelements 30 kommt dabei in der Öffnung 14 nach Durchlaufen der Innennut 13 ebenfalls wieder zum Vorschein und umgreift deren in Einschubrichtung hintere Kante. Das Sperrelement 30 ist auf diese Weise in der Innennut 13 verdrehfest angeordnet und gesichert, wobei sein hinteres verdicktes Ende 34 stets im "Fenster" der Öffnung 14 sichtbar und zugänglich ist, ohne über das Gehäuse nach aussen vorzustehen. In Fig. 2 schliesst das hintere Ende bündig aussen mit dem Gehäuse ab. Durch das Sperrelement 30 ist auch die Dichtung im Gehäuse 10 gesichert, da die Rastarme 32 des Sperrelements in den freien Querschnitt des Gehäuses vorstehen.

Mit derart vormontierter Dichtung 20 und vormontiertem Sperrelement 30 ist die erfindungsgemässe Anschlussvorrichtung gebrauchsfertig.

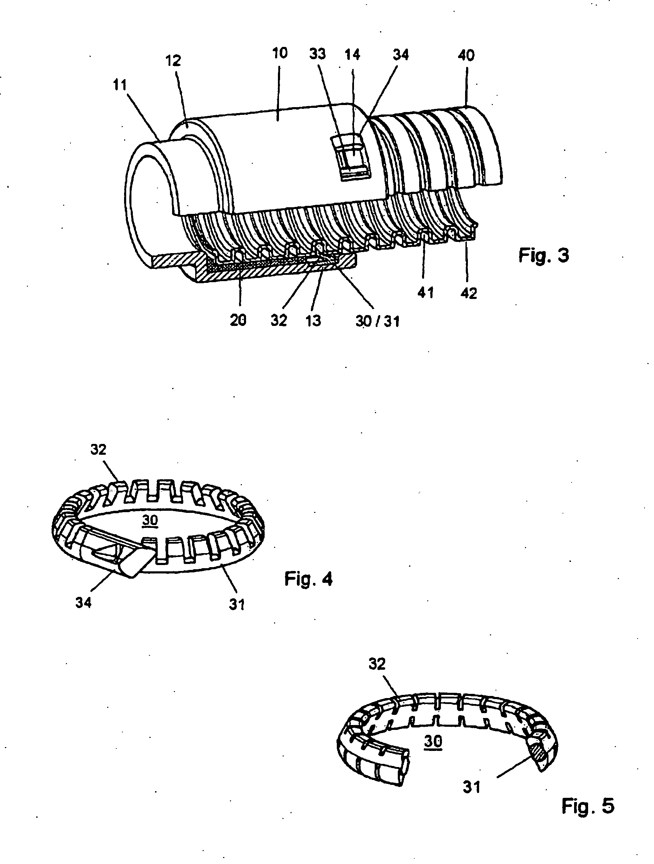

Zur Herstellung einer Anschlussverbindung mit einem Rohr 40 wie dem dargestellten Wellrohr genügt es, das Rohr in seiner Längsrichtung in das Gehäuse 10 einzuführen. Beim Einführen des Rohres werden die schräg nach innen vorstehenden Rastarme 32 des Sperrelements 30 durch die Wellenberge 42 des Rohres 40 nach aussen elastisch ausgelenkt und rasten nach den Wellenbergen 42 jeweils in die Wellentäler 41 bzw. die durch diese gebildeten ringförmigen Aussennuten des Rohres 40 ein. Die entsprechende Situation zeigt Fig. 3, wobei das Rohr 40, wie dies bevorzugt ist, bis zum Anschlag an dem Gehäuseabsatz 12 vorgeschoben ist, so dass die Rastarme 32 in das vierte Wellental bzw. die dritte Aussennut vom vorderen Rohrende her gezählt eingreifen. Durch Anlage der vordersten drei Wellenberge 42 an der Dichtung 20 wird zusätzlich eine Abdichtung erreicht, so dass es möglich wäre, die Vorrichtung für den Anschluss einer Fluidleitung oder dergleichen einzusetzen.

Derart verrastet kann das Rohr 40 nicht mehr aus dem Gehäuse herausgezogen werden. Die Verrastung ist dabei selbsthemmend. Unter der Wirkung einer Abzugskraft würden sich die Rastarme 32 des Sperrelements nämlich weiter aufrichten, tiefer in die Aussennut 41 des Rohres 40 eindringen und den Querschnitt weiter verringern. Günstig wirkt sich hierbei aus, dass die freien Enden der Rastarme 32 zusätzlich nach innen abgebogen sind. Durch die dichte Anordnung der Rastarme sowie ihre Verteilung über praktisch den gesamten Umfang ergibt sich auch eine optimale Lastverteilung, so dass hohe Abzugskräfte aufgenommen werden können. Der Umschlingungswinkel des Rohres 40 mit dem bzw. durch das Sperrelement 30 ist annähernde 360°, sollte nicht kleiner als 270° sein und beträgt im dargestellten Ausführungsbeispiel 340°.

Zum Lösen des Verrastung wird das Sperrelement 30 aus dem Gehäuse 10 durch die Gehäuseöffnung 14 in tangentialer Richtung herausgezogen, wobei es an seinem In der Gehäuseöffnung 14 zugänglichen verdickten hinteren Ende 34 z.B. mit einem spitzen Werkzeug erfasst werden kann. Zum Ansetzen des Werkzeugs kann das verdickte hintere Ende 34 noch mit einem kleinen Loch oder dgl. versehen werden.

Die Figuren 4, 5 und 6 zeigen Beispiele für alternative Ausführungsformen von Sperrelementen 30, die im Rahmen der Erfindung ebenfalls einsetzbar sind.

Das Sperrelement 30 von Fig. 4 ist dem vorbeschriebenen Sperrelement 30 am ähnlichsten und weist wie dieses ein bandförmiges Grundelement 31 und daran ausgebildete, schräg nach innen gerichtete Rastarme 32 auf. Im Unterschied zu dem vorbeschriebenen Sperrelement 30, bei dem das bandförmige Grundelement 31 bei der Auslenkung der Rastarme 32 seine Orientierung nicht ändert, wird das bandförmige Grundelement 31 bei der Auslenkung der Rastarme 32 hier mitverdreht. Die Rastarme 32 selbst sind gegenüber dem Grundelement 31 so gut wie nicht flexibel. Das gesamte Sperrelement 30 tordiert dadurch in sich beim Durchstecken eines Rohres bzw. unter einer Abzugskraft.

Beim Sperrelement 30 von Fig. 5 ist das bandförmige Grundelement 31 in der Mitte der Rastarme angeordnet. Das Grundelement 31 kann hier als Drehachse der Rastarme 32 verstanden werden.

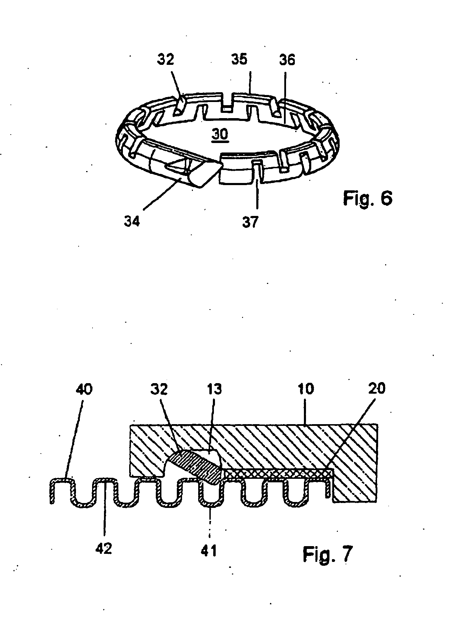

Das Sperrelement 30 von Fig. 6 ist mäanderförmig, so dass hier zwischen einem Grundelement und den Rastarmen 32 nicht mehr unterschieden werden kann. Wie bei den Sperrelementen von Fig. 4 und 5 erfolgt die elastische Auslenkung des Elements 30 durch Torsion des gesamten Elements in sich. Die Ausführungsform 30 von Fig. 6 bietet ein besonders günstiges Verhältnis zwischen den potentiellen Kraftübertragungsflächen 35 und 36 zur Übertragung der Abzugskräfte und den schlitzförmigen Perforationen 37. Dadurch wird eine günstige Torsionsflexibilität für eine leichte Montage in Kombination mit grosser Abzugsfestigkeit erreicht.

Fig. 7. zeigt schematisch in einem Schnitt, wie die Rastarme 32 des Elements 30 von Fig. 6 in eine speziell günstig geformte Innennut 13 des Gehäuses 10 und in eine Aussennut 41 eines Wellrohres 40 eingreifen können. Die Innennut 13 ist hier mit einem einseitig abgerundeten Querschnitt versehen, der es dem Sperrelement 30 erleichtert, sich beim Einstecken des Wellrohres 40 zu tordieren und dadurch den für das Einstecken notwendigen Querschnitt freizugeben. Zum anderen ist der Querschnitt so gewählt, dass sich die Rastarme 32 unter der Wirkung einer Abzugskraft in der Nut 41 verkeilen. Für die Ausführungsformen von Fig. 4 und Fig. 5 können entsprechende Querschnitte für die Innennut 13 des Gehäuses 10 vorgesehen werden.

Im Vergleich mit der Ausführungsform des Sperrelements 30 von Fig. 1 sind die Sperrelemente 30 der Figuren 4 - 6 robuster und können höheren Ausreisskräften wiederstehen. Bei der Ausführungsform von Fig. 1 werden lediglich die Rastarme 32 an dem sich nicht mitverformenden Grundelement 31 ausgelenkt und müssen dadurch eher filigran ausgebildet werden, damit der Widerstand, den sie dem Einstecken des Rohres entgegensetzen, nicht zu gross wird.

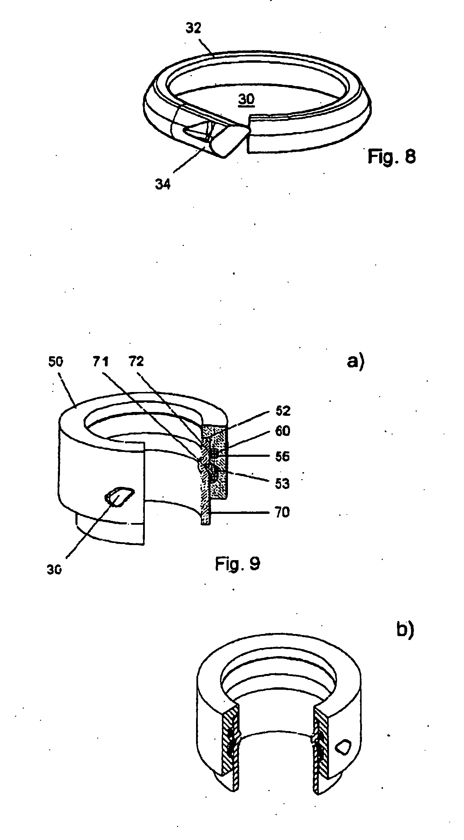

In Fig. 8 ist eine Ausführungsform eines Sperrelements 30 dargestellt, bei der auf eine schlitzförmige Perforation gemäss dem Sperrelement 30 von Fig. 6 verzichtet ist. Diese Ausführungsform Ist für besonders elastische Materialien bzw. Materialien mit einer ausgeprägten Elastizität In Umfangsrichtung der ringförmigen Innennut 13 geeignet. Eine derartige Materialelastizität ermöglicht der einteiligen Rastfeder bei der Torsionsbewegung, sich in der Randfaser zu dehnen bzw. zu stauchen.

Fig. 9 zeigt unter a) eine weitere Ausführungsform einer erfindungsgemässen Anschlussvorrichtung mit einem Gehäuse 50, einer O-Ring-Dichtung 60 und einem mäanderförmigen Sperrelement 30 nach Art des Sperrelements von Fig. 6 zum Anschluss eines Rohres 70. Das Sperrelement könnte in diesem Zusammenbau aber auch gemäss den Ausführungsformen von Fig. 1 - 3, 4, 5 oder 8 ausgebildet sein.

Das Gehäuse 50 ist wiederum hülsenförmig, weist einen Gehäuseabsatz 52, eine erste ringförmige Innennut 53 für den Eingriff des Sperrelements 30.3 sowie eine zweite ringförmige Innennut 55 für die O-Ring-Dichtung 60 auf. Im Vergleich mit dem Gehäuse 10 von Fig. 1 ist das Gehäuse 50 in seiner Axialrichtung kürzer, da die O-Ring-Dichtung 60 weniger Platz als die hülsenförmige Dichtung 20 benötigt. Ein mit dem Anschlussende 11 des Gehäuses 10 vergleichbares Anschlussende ist bei dem Gehäuse 50 nicht dargestellt, könnte jedoch ebenfalls vorhanden sein.

Das In Fig. 9 unter a) dargestellte Sperrelement 30 ist linksdrehend, d.h. im Gegenuhrzeigersinn aus dem Gehäuse 10 herausziehbar. Möglich wäre jedoch auch die umgekehrte Anordnung mit einem rechtdrehenden, d.h. im Uhrzeigersinn entfernbaren Sperrelemement, wie dies unter b) in Fig. 9 dargestellt ist. Bei beengten Platzverhältnissen kann es unter Umständen eine Rolle spielen, mit welchem Drehsinn das Sperrelement herausziehbar ist. Generell sind alle erfindungsgemässen Ausführungsformen auf die eine oder die andere Art gestaltbar.

Das in Fig. 9 angeschlossene Rohr 70 ist im Übrigen kein Wellrohr, sondern glatt und durch eine einzelne Einschnürung mit lediglich einer Aussennut 71 versehen. Das zeigt, dass die Erfindung für den Anschluss verschiedenster Arten von Rohren anwendbar ist. Die O-Ring-Dichtung 60 dichtet gegen die glatte Aussenseite 72 des Rohres vor der Aussennut 71.

Im Zusammenhang mit der in den Figuren 1 - 3 dargestellten Ausführungsform wurde bereits eine Möglichkeit der verdrehsicheren Anordnung des Sperrelements 30 in der vormontierten Stellung im Gehäuse 10 erläutert. Die Verdrehsicherung ergibt sich bei dieser Ausführungsform bei der Vormontage des Sperrelements von selbst, d.h. dass keine zusätzlichen Massnamen oder Handgriffe zu ihrer Herstellung oder Aktivierung erforderlich sind. Die beschriebene Verdrehsicherung lässt sich in einfacher Weise auch wieder lösen, indem das vordere verdickte Ende 33 des Sperrelements 30 nach innen gedrückt und so ausser Eingriff mit der in Einschubrichtung hinteren Kante der Gehäuseöffnung 14 gebracht wird.

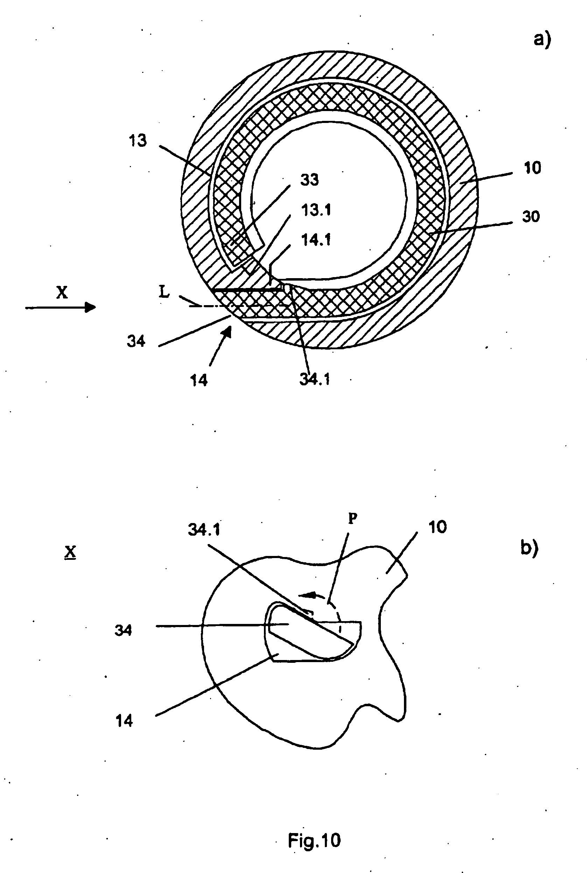

Nachfolgend werden anhand der Figuren 10 - 16 weitere Ausführungsformen für ohne zusätzliche Handgriffe bei der Vormontage des Sperrelements sich ergebende sowie leicht lösbare Verdrehsicherungen des Sperrelements erläutert. Dabei entspricht die Blickrichtung bei den Schnittzeichnungen der Figuren 10 a), 11, 13 a), 14 a) und 15 jeweils der Einsteckrichtung des Rohrendes in die dargestelten Gehäuse.

Bei der Ausführungsform von Fig. 10 weist das Sperrelement 30 bezüglich der zur Herausziehrichtung entgegengesetzten Einschubrichtung ein vorderes 33 und ein hinteres Ende 34 und eine im Bereich des hinteren Endes 34 ausgebildete Rastnase 34.1 auf. Das Gehäuse 10 weist an einem Ende der Innennut 13 einen ersten Anschlag 13.1 und im Bereich der Öffnung 14 einen zweiten Anschlag 14.1 auf. In seiner vormontierten Stellung ist das Sperrelement 30 durch Anschlagen mit seinem vorderen Ende 33 an dem ersten Anschlag 13.1 gegen Verdrehen in der Einschubrichtung und durch Um- bzw. Hintergreifen des zweiten Anschlags 14.1 mit der Rastnase 34.1 gegen Verdrehen in der Herausziehrichtung gesichert.

Wie dies in Fig. 10 unter b) zu erkennen ist, ist die Gehäuseöffnung 14 gegenüber dem Querschnitt des Sperrelements 30 bzw. seines hinteren Endes 34 so erweitert, dass sich das Sperrelement 30 bzw. sein hinteres Ende 34 entgegen seiner Eigenelastizität um seine Längsrichtung L so verdrehen bzw. tordieren lässt, dass die Rastnase 34.1 ausser Eingriff mit dem zweiten Anschlag 14.1 kommt. Danach kann das Sperrelement 30 aus der Gehäuseöffnung 14 herausgezogen werden. Bei der Vormontage des Sperrelements 30 rastet die Rastnase 34.1 unter der Wirkung der Elastizität des Sperrelements 30 selbstätig hinter dem zweiten Anschlag 14.1 ein, sobald das Sperrelement 30 vollständig in die Innennut 13 eingeschoben ist und mit seinem vorderen Ende am ersten Anschlag 13.1 anschlägt.

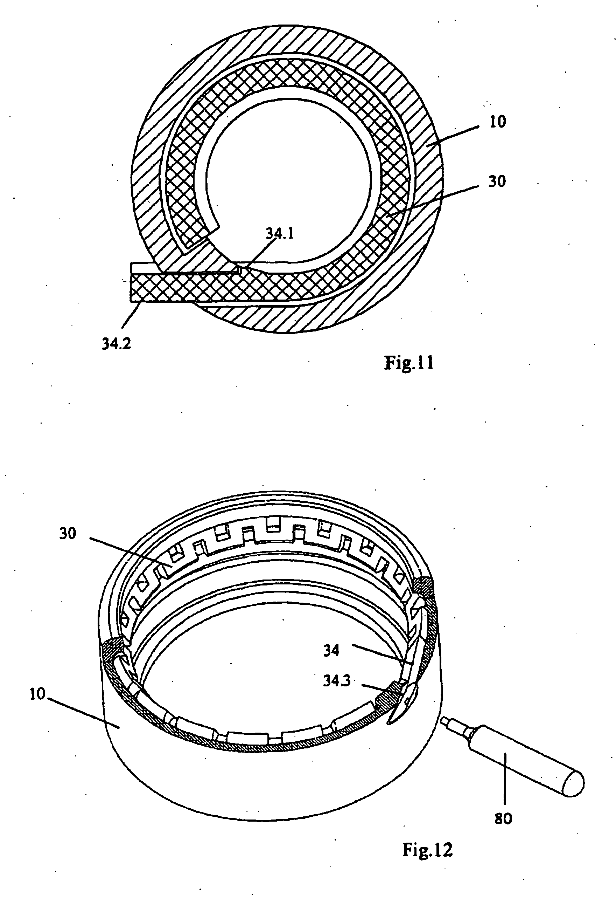

Zur Erleichterung der vorbeschriebenen Manipulation zum Lösen der Verdrehsicherung des Sperrelements 30 kann dieses, wie in Fig. 11 dargestellt, einen kleinen Überstand 34.2 gegenüber dem Gehäuse 10 haben, sodass die Rotation bzw. Torsion des Sperrelements 30 unmittelbar von Hand ausgeführt werden kann. Das hintere Ende 34 kann zum Ansetzen eines Werkzeugs 80 auch mit einer Einführöffnung 34.3 wie z.B. einem kleinen Loch versehen sein, wie dies in Fig, 12 dargestellt ist. In diesem Fall kann das Sperrelment 30 ganz im Gehäuse 10 versenkbar sein. Eine Kombination der beiden Massnahmen von Fig. 11 und 1 wäre natürlich ebenfalls möglich

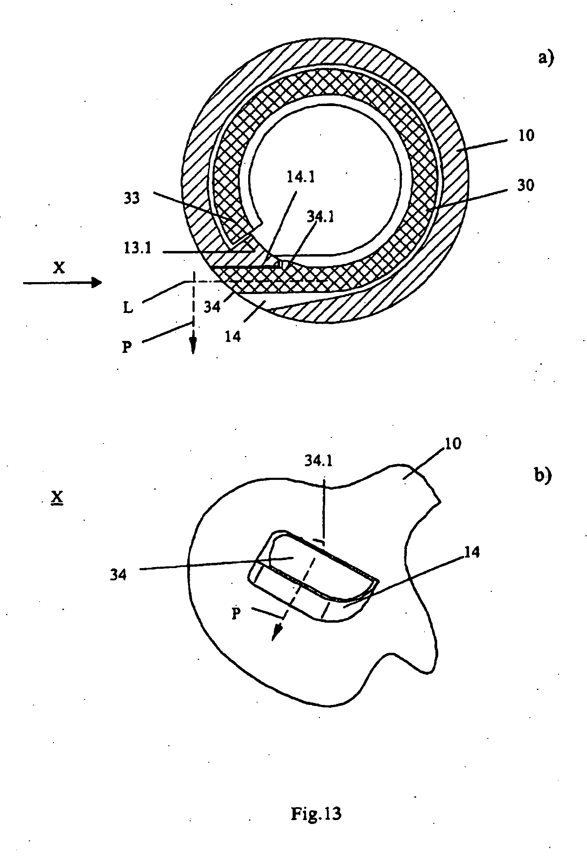

Fig. 13 zeigt unter a) das Gehäuse 10 einer Ausführungsform einer Anschlussvorrichtung mit verdrehfest darin angeordnetem und gesichertem Sperrelement 30, welches wie das Sperrelement 30 von Fig. 10 durch Anschlagen mit seinem vorderen Ende 33 an einem ersten Anschlag 13.1 gegen Verdrehen in der Einschubrichtung und durch Umgreifen eines zweiten Anschlags 14.1 mit einer Rastnase 34.1 gegen Verdrehen in der Herausziehrichtung gesichert ist.

Im Unterschied zur Ausführungsform von Fig. 10 ist die Gehäuseöffnung 14 hier gegenüber dem Querschnitt des Sperrelements 30 bzw. seines hinteren Endes 34 jedoch so erweitert, dass sich das Sperrelement 30 bzw. sein hinteres Ende 34 entgegen seiner Eigenelastizität seitlich gegenüber seiner Längsrichtung L so wegbiegen lässt, dass die Rastnase 34.1 ausser Eingriff mit dem zweiten Anschlag 14.1 kommt Unter b) ist diese Art der Lösung der Verdrehsicherung nochmals schematisch verdeutlicht. Auch bei dieser Ausführungsform könnte von den Massnahmen gemäss den Fig. 11 und/oder 12 Gebrauch gemacht werden.

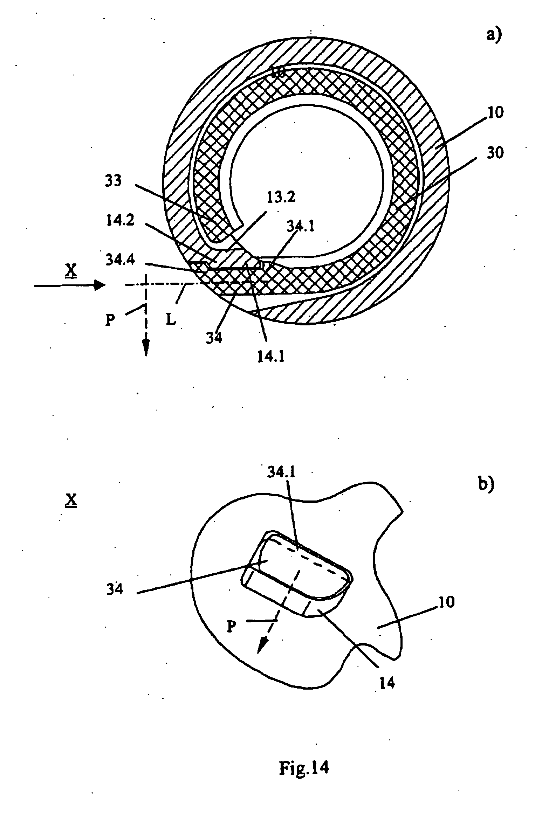

Die Ausführungsform von Fig. 14 entspricht hinsichtlich des Lösemechanismus des Sperrelements 30 der Ausführungsform von Fig. 13. Unterschiedlich ausgebildet ist hier allerdings die Art der Sicherung des Sperrelements 30 gegen Verdrehen in Einschubrichtung. Anstatt mit seinem in Einschubrichtung vorderen Ende 33 an einem Anschlag am Ende der Innennut 13 anzuschlagen, ist das Sperrelement 30 im Bereich seines hinteren Endes 34 mit einer weitere Rastnase 34.4 und das Gehäuse 10 im Bereich der Öffnung 14 mit einem weiteren Anschlag 14.2 versehen. In seiner vormontierten Stellung ist das Sperrelement durch Anschlagen mit der weiteren Rastnase 34.4 an dem weiteren Anschlag 14.2 gegen Verdrehen in der Einschubrichtung gesichert. Das vordere Ende 33 des Sperrelements weist dabei bevorzugt einen Abstand von Ende 13.2 der Innennut 13 auf. Diese Ausbildung hat den Vorteil einer genaueren Positionierung des Sperrelements 30, welche nicht länger von dessen Längentoleranz bestimmt wird.

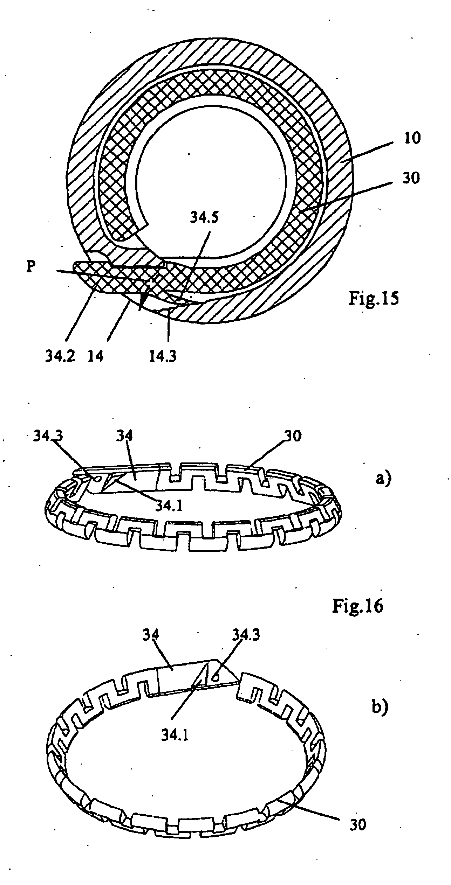

Die Ausführungsform von Fig. 15 entspricht derjenigen von Fig. 14, wobei hier zusätzlich eine Hilfsvorrichtung zum Herausbewegen des Sperrelements 30 aus dem Gehäuse 10 vorgesehen ist. Diese funktioniert nach Art einer Ratsche, wozu am hinteren Ende 34 des Sperrelements 30 ein von diesem abstehender Federarm 34.5 und an der Gehäuseöffnung 14 eine mehrfach abgestufte Rastfläche 14.3 vorgesehen ist. Der Federarm 34.5 ist mit der Rastfläche 14.3 nach Art einer Sperrklinke In Eingriff.

Betätigt wird die Hilfsvorrichtung durch Drücken z.B. mit dem Finger auf den Überstand 34.2, wobei der Federarm 34.5 gegen das Sperrelement 30 hin gebogen und dieses dabei ein kleines Wegstück nach aussen drückt, Beim Loslassen des Überstandes springt der Federarm um eine Stufe an der Rastfläche 14.3 nach aussen, wonach der beschriebene Vorgang ggf. mehrfach wiederholt werden kann.

Fig. 16 zeigt unter a) und b) jeweils noch perspektivische Darstellungen eines mäanderförmigen Sperrelements 30 mit Rastnase 34.1 und Einführöffnung 34.3 für ein Werkzeug z.B. entsprechend dem Werkzeug 80.

Das Sperrelement 30 könnte zusätzlich im Gehäuse auch mit einem die Gehäuseöffnung 14 überdeckenden Aufkleber gesichert sein. Der Aufkleber könnte dabei einen wiederverwendbaren Charakter oder die Funktion eines Siegels erfüllen. Zu seiner leichteren Entfernung könnte der Aufkleber mit einer klebefreien Griffkante versehen sein.

Die Erfindung ist ebenfalls nicht beschränkt auf die Verwendung nur eines Sperrelements. Es könnten auch mehrere Sperrelemente hintereinander angeordnet sein, wodurch die Ausreisskraft erhöht würde.

Ebenso (oder auch in Kombination mit mehreren Sperrelementen) könnten zur Erhöhung der Dichtwirkung mehrere Dichtungen, insbesondere O-Ring-Dichtungen bzw. Schnurdichtungen anderer Ausführungsform, hintereinander angeordnet werden. Als Beispiel für alternative Schnurdichtungsformen sei hier die Kreuzringdichtung genannt.

Alle Einzelteile der erfindungsgemässen Anschlussvorrichtung können aus Polymerwerkstoffen, bevorzugt basierend auf Polyamiden, durch Spritzgiessen hergestellt werden. Für die Herstellung von Sperrelementen des in Fig. 1 dargestellten Typs sollte das Material nicht zu steif sein, damit die Rastarme eine ausreichende Flexibilität haben und unter Belastung nicht brechen. Für Polyamid 6 zum Beispiel mit einer Reissdehnung > 50% wäre diese Bedingung erfüllt. Für die Herstellung der Sperrelemente von Fig. 4-6 könnte demgegenüber auch ein wesentlich steiferes HT-Polyamid (= teilaromatisches, teilkristallines Polyamid mit höherem Schmelzpunkt) mit einer Reissdehnung < 5% eingesetzt werden, weil sich diese Elemente nur in sich sowie insgesamt weniger verwinden.

Die beschriebene, erfindungsgemässe Anschlussvorrichtung findet bevorzugt Verwendung auf dem Gebiet der gewellten Kabelschutzrohre für die Bereiche Maschinenbau, Robotik und Schienenfahrzeuge, sowie auf dem Gebiet der medienführenden Leitungen (Fluidleitungen) in Industrie und Automobilbau.

### BEZEICHNUNGSLISTE

- 10: Gehäuse
- 11: Anschlussende des Gehäuses
- 12: Gehäuseabsatz
- 13: ringförmige Innennut im Gehäuse
- 13.1: erster Anschlag
- 13.2: Ende der Innennut 13
- 14: Öffnung zur Ringnut im Gehäuse
- 14.1: zweiter Anschlag
- 14.2: weiterer Anschlag
- 14.3: Rastfläche
- 20: hülsenförmige Dichtung
- 30: Sperrelement
- 31: bandförmiges Grundelement
- 32: Rastarme
- 33: vorderes Ende
- 34: hinteres Ende
- 34.1: Rastnase am hinteren Ende 34
- 34.2: Überstand
- 34.3: Einführöffnung
- 34.4: weitere Rastnase
- 34.5: Federarm
- 40: Wellrohr
- 41: Wellentäler des Wellrohrs/ ringförmige Aussennut
- 42: Wellenberge des Wellrohrs
- 50: Gehäuse
- 52: Gehäuseabsatz
- 53: erste ringförmige Innennut im Gehäuse
- 55: zweite ringförmige lnnennut im Gehäuse
- 60: O-Ring-Dichtung
- 70: Rohr
- 71: Ringnut im Rohr
- 72: Dichtfläche am Rohr
- 80: Werkzeug

## Patentansprüche

1. Anschlussvorrichtung für ein Rohr (40) mit ringförmiger Aussennut (41), welche ein Gehäuse (10) aufweist, in welches das Rohr (40) einsteckbar und darin durch ein Sperrelement (30) arretierbar ist, wobei das Sperrelement (30) in eine ringförmige Innennut (13) des Gehäuses (10) und in die ringförmige Aussennut (41) des Rohres (40) eingreift und sich durch eine Öffnung (14) im Gehäuse (10) in einer zu den Ringnuten (13,41) tangentialen Richtung aus diesem herausziehen lässt und wobei das Sperrelement (30) in der innennut (31) des Gehäuses (10) vormontierbar ist, in dieser Stellung unter elastische Auslenkung ein Einstecken des Rohres (40) in das Gehäuse (10) erlaubt und dabei in die Aussennut (41) des Rohres (40) einrastet, **dadurch gekennzeichnet, dass** das Sperrelement (30) in dieser Stellung durch Anschlagen an einer Kante (13.1; 14.2) und durch Umgreifen einer Kante (14.1) verdrehfest im Gehäuse (10) angeordnet und gesichert ist.

2. Anschlussvorrichtung nach Anspruch 1, **dadurch gekennzeichnet, dass** der Umschlingungswinkel des Rohres (40) mit dem Sperrelement (30) mindestens 270° beträgt.

3. Anschlussvorrichtung nach einem der Ansprüche 1 oder 2. **dadurch gekennzeichnet, dass** das Sperrelement (30) In sich tordierbar und/oder mit elastisch biegsamen Rastarmen (32) versehen ist.

4. Anschlussvorrichtung nach Anspruch 3, **dadurch gekennzeichnet, dass** die Rastarme (32) an einem bandförmigen Rundelement (31) unter einem schrägen Winkel angeformt sind.

5. Anschlussvorrichtung nach Anspruch 3, **dadurch gekennzeichnet, dass** das Sperrelement (30) mäanderförmig ist.

6. Anschtussvorrichtung nach Anspruch 3, **dadurch gekennzeichnet, dass** das Sperrelement (30) zumindest entlang des Bereichs der Verrastung einen gleichmässigen Querschnitt aufweist.

7. Anschlussvorrichtung nach einem der Ansprüche 1-6, **dadurch gekennzeichnet, dass** das Sperrelement (30) ganz im Gehäuse versenkbar ist.

8. Anschlussvorrichtung nach einem der Ansprüche 1-7, **dadurch gekennzeichnet, dass** das Sperrelement (30) ein verdicktes Ende (34) aufweist, mit dem es in seiner vormontierten Stellung an einer Kante der Gehäusöffnung (14) anschlägt.

9. Anschlussvorrlchtung nach einem der Ansprüche 1-8, **dadurch gekennzeichnet, dass** das Sperrelement (30) bezüglich der zur Herausziehrichtung entgegengesetzten Einschubrichtung ein vorderes (33) und ein hinteres verdicktes Ende (34) aufweist, dass die Gehäuseöffnung (14) bezüglich der Einschubrichtung eine vordere und eine hintere Kante aufweist und dass das Sperrelement (30) in seiner vormontierten Stellung durch Anschlagen mit seinem hinteren verdickten Ende (34) an der vorderen Kante der Gehäuseöffnung (14) und durch Umgreifen der hinteren Kante der Gehäuseöffnung (14) mit seinem vorderen verdickten Ende (33) verdrehfest im Gehäuse (10) angeordnet und gesichert ist.

10. Anschlussvorrichtung nach einem der Ansprüche 1 - 8, **dadurch gekennzeichnet, dass** das Sperrelement (30) bezüglich der zur Herausziehrichtung entgegengesetzten Einschubrichtung ein vorderes (33) und hinteres Ende (34) und eine im Bereich des hinteren Endes (34) ausgebildete Rastnase (34.1) aufweist, dass das Gehäuse (10) an einem Ende der Innennut (13) einen ersten Anschlag (13.1) und im Bereich der Öffnung (14) einen zweiten Anschlag (14.1) aufweist und dass das Sperrelement (30) in seiner vormontierten Stellung durch Anschlagen mit seinem vorderen Ende (33) an dem ersten Anschlag (13.1) gegen Verdrehen in der Einschubrichtung und durch Um- bzw. Hintergreifen des zweiten Anschlags (14.1) mit der Rastnase (34.1) gegen Verdrehen in der Herausziehrichtung gesichert ist.

11. Anschlussvorrichtung nach einem der Ansprüche 1-8, **dadurch gekennzeichnet, dass** das Sperrelement (30) bezüglich der zur Herausziehrichtung entgegengesetzten Einschubrichtung ein vorderes (33) und hinteres (34) Ende und eine im Bereich des hinteren Endes (34) ausgebildete Rastnase (34.1) sowie eine weitere Rastnase (34.4) aufweist, dass das Gehäuse (10) im Bereich der Öffnung (14) einen innenliegenden zweiten (14.1) und einen aussenliegenden dritten Anschlag (14.2) aufweist und dass das Sperrelement (30) in seiner vormontieren Stellung durch Anschlagen mit seiner weiteren Rastnase (34.4) an dem aussenliegenden dritten Anschlag (14.2) gegen Verdrehen in der Einschubrichtung und durch Um- bzw. Hintergreifen des zweiten Anschlags mit seiner vorderen Rastnase (34.1) gegen Verdrehen in der Herauszjehrichtung gesichert ist.

12. Anschlussvorflchtung nach Anspruch 11, **dadurch gekennzeichnet, dass** das vordere Ende (33) des Sperrelements (30) in seiner vormontierten Stellung einen Abstand von einem Ende (13.2) der Innennut (13) aufweist.

13. Anschlussvorrichtung nach einem der Ansprüche 10 -12, **dadurch gekennzeichnet, dass** die Sicherung des Sperrelements (30) in seiner vormontierten Stellung gegen Verdrehen in der Herausziehrichtung durch eine Torsion seines hinteren Endes (34) lösbar ist.

14. Anschlussvorrichtung nach einem der Ansprüche 10 -12, **dadurch gekennzeichnet, dass** die Sicherung des Sperrelements (30) in seiner vormontierten Stellung gegen Verdrehen in der Herausziehrichtung durch ein seitliches Wegbiegen seines hinteren Endes (34) lösbar ist.

15. Anschlussvorrichlung nach einem der Ansprüche 13 oder 14, **dadurch gekennzeichnet, dass** das Sperrelement im Bereich seines hinteren Endes (34) mit einer Einführöffnung (34.3) für ein Werkzeug (80) zum Lösen der Sicherung des Sperrelements (30) in seiner vormontierten Stellung gegen Verdrehen in der Herausziehrichtung versehen Ist.

16. Anschlussvorrichtung nach einem der Ansprüche 12 -15, **dadurch gekennzeichnet, dass** das Sperrelement In seiner vormontierten Stellung einen als Handhabe zum Lösen der Sicherung des Sperrelements (30) in seiner vormontierten SteQung gegen Verdrehen in der Herausziehrichtung verwendbaren überstand (34.2) gegenüber dem Gehäuse (10) aufweist.

17. Anschlussvorrichtung nach den Ansprüchen 14 und 16, **dadurch gekennzeichnet, dass** sie mit einer Hilfsvorrichtung zum Herausbewegen des Sperrelements (30) aus dem Gehäuse (10) in Form einer durch das seitliche Wegbiegen des hinteren Endes (34) des Sperrelements (30) betätigten Ratsche mit einem Federarm (34.5) und einer mehrfach abgestuften Rastfläche (14.3) versehen ist

18. Anschlussvorrichtung nach einem der Ansprüche 1 - 17, **dadurch gekennzeichnet, dass** die Innennut (13) mit einem abgerundeten Profil versehen ist.

19. Anschtussvornchtung nach einem der Ansprüche 1-18, **dadurch gekennzeichnet, dass** sie mit einer Dichtung (20), insbesondere einer hülsenförmigen Flachdichtung oder einer O-Ring-Dichtung, versehen ist.

20. Anschlussvorrichtung nach Anspruch 19, **dadurch gekennzeichnet, dass** die Dichtung (20) in Einsteckrichtung des Rohres (40) jenseits des Sperrelements (30) angeordnet ist.

21. Anschlussvorrichtung nach Ansprüche 1 - 20, **dadurch gekennzeichnet, dass** mehrere Sperrelemente (30) hintereinander angeordnet sind.

22. Anschlussvorrichtung nach den Ansprüche 19 - 21, **dadurch gekennzeichnet, dass** mehrere Dichtungen (20) hintereinander angeordnet sind.

23. Anschtussvorrichtung nach einem der Ansprüche 1 - 22, **dadurch gekennzeichnet, dass** ihre Teile aus Polymerwerkstoffen hergestellt sind.

24. Verwendung der Anschlussvarrichtung nach einem der Ansprüche 1 - 23 auf dem Gebiet der gewellten Kabeischutzrohre für den Bereich Maschinenbau, Robotik oder Schienenfahrzeuge.

25. Verwendung der Anschlussvorrichtung nach einem der Ansprüche 1-23 auf dem Gebiet der medienführenden Leitungen in Industrie oder Automobilbau.

## Claims

1. Connecting device for a pipe (40) with a ring-shaped external groove (41), which connecting device has a housing (10) into which the pipe (40) can be inserted and can be locked therein by means of a locking element (30), where the locking element (30) engages with a ring-shaped internal groove (13) of the housing (10) and with the ring-shaped outer groove (41) of the pipe (40) and can be extracted therefrom through an opening (14) in the housing (10) in a direction tangential to the annular grooves (13, 41), and where the locking element (30) in the internal groove (31) of the casing (10) can be preassembled, enables insertion of the pipe (40) into the housing (10) in this position under elastic displacement and latches into the external groove (41) of the pipe (40), **characterised in that** the locking element (30) is arranged in this position in a torsionally secure manner and secured by means of stops on an edge (13.1, 14.2) and by enveloping of an edge (14.1).

2. Connecting device according to claim 1, **characterised in that** the wraparound angle between the pipe (40) and the locking element (30) is at least 270°.

3. Connecting device according to one of claims 1 or 2, **characterised in that** the locking element (30) is intrinsically twistable and/or provided with elastically flexible detent arms (32).

4. Connecting device according to claim 3, **characterised in that** the detent arms (32) are integrally moulded on a strip-shaped base element (31) at an oblique angle.

5. Connecting device according to claim 3, **characterised in that** the locking element (30) is meandering.

6. Connecting device according to claim 3, **characterised in that** the locking element (30) has a uniform cross-section at least along the area of the engagement.

7. Connecting device according to one of claims 1 to 6, **characterised in that** the locking element (30) is fully retractable in the housing.

8. Connecting device according to one of claims 1 to 7, **characterised in that** the locking element (30) has a thickened end (34) with which, in its preassembled position, it abuts an edge of the housing opening (14).

9. Connecting device according to one of claims 1 to 8, **characterised in that**, with regard to the direction of insertion opposite to the direction of extraction, the locking element (30) has a front (33) and rear thickened end (34), **in that** the housing opening (14) has a front and rear edge with regard to the direction of insertion, and **in that** the locking element (30) is arranged and secured in its preassembled position by means of abutment with its rear thickened end (34) on the front edge of the housing opening (14) and by enveloping of the rear edge of the housing opening (14) with its front thickened end (33) in a torsionally rigid manner in the housing (10).

10. Connecting device according to one of claims 1 to 8, **characterised in that**, with regard to the direction of insertion opposite to the direction of extraction, the locking element (30) has a front (33) and rear end (34) and a detent lug (34.1) formed in the area of the rear end (34), **in that** the housing (10) has a first stop (13.1) at one end of the internal groove (13) and a second stop (14.1) in the area of the opening (14), and **in that** the locking element (30) is secured against rotation in the direction of insertion in its preassembled position by means of abutment with its front end (33) on the first stop (13.1) and against rotation in the direction of extraction by enveloping or rear engagement of the second stop (14.1) with the detent lug (34.1).

11. Connecting device according to one of claims 1 to 8, **characterised in that**, with regard to the direction of insertion opposite to the direction of extraction, the locking element (30) has a front (33) and rear end (34) and a detent lug (34.1) formed in the area of the rear end (34) as well as an additional detent lug (34.4), **in that** the housing (10) has an internal second (14.1) and external third stop (14.2) in the area of the opening (14), and **in that** the locking element (30) is secured against rotation in the direction of insertion in its preassembled position through abutment with its additional detent lug (34.4) on the external third stop (14.2) and against rotation in the direction of extraction through enveloping or rear engagement of the second stop with its front detent lug (34.1).

12. Connecting device according to claim 11, **characterised in that** the front end (33) of the locking element (30) has a clearance from one end (13.2) of the internal groove (13) in its preassembled position.

13. Connecting device according to one of claims 10 to 12, **characterised in that** the securing of the locking element (30) in its preassembled position against rotation in the direction of extraction can be loosened by means of torsion of its rear end (34).

14. Connecting device according to one of claims 10 to 12, **characterised in that** the securing of the locking element (30) in its preassembled position against rotation of the direction of extraction can be loosened by means of lateral bending away of its rear end (34).

15. Connecting device according to one of claims 13 or 14, **characterised in that** the locking element is provided in the area of its rear end (34) with an inlet (34.3) for a tool (80) for loosening the securing of the locking element (30) in its preassembled position against rotation in the direction of extraction.

16. Connecting device according to one of claims 12 to 15, **characterised in that** the locking element, in its preassembled position, has a protrusion (34.2) in relation to the housing (10), which protrusion can be used as a handle for loosening the securing of the locking element (30) in its preassembled position against rotation in the direction of extraction.

17. Connecting device according to claims 14 and 16, **characterised in that** it is provided with an auxiliary device for removing the locking element (30) from the housing (10) in the form of a ratchet with a spring arm (34.5) and a multi-tiered detent surface (14.3), which ratchet is activated by the lateral bending away of the rear end (34) of the locking element (30).

18. Connecting device according to one of claims 1 to 17, **characterised in that** the internal groove (13) is provided with a rounded profile.

19. Connecting device according to one of claims 1 to 18, **characterised in that** it is provided with a seal (20), in particular a sleeve-shaped flat seal or an O-ring seal.

20. Connecting device according to claim 19, **characterised in that** the seal (20) is arranged in the direction of insertion of the pipe (40) beyond the locking element (30).

21. Connecting device according to claims 1 to 20, **characterised in that** several locking elements (30) are arranged behind each another.

22. Connecting device according to claims 19 to 21, **characterised in that** several seals (20) are arranged behind each another.

23. Connecting device according to one of claims 1 to 22, **characterised in that** its parts are manufactured from polymer materials.

24. Use of the connecting device according to one of claims 1 to 23 in the field of corrugated cable tubes for the mechanical engineering, robotics or rail vehicles sectors.

25. Use of the connecting device according to one of claims 1 to 23 in the field of medium-conducting pipes in industry or automotive engineering.

## Revendications

1. Dispositif d'assemblage pour un tuyau (40) avec rainure extérieure (41), lequel dispositif présente un logement (10) dans lequel le tuyau (40) peut être enfiché et y être bloqué par un élément d'arrêt (30), où l'élément d'arrêt (30) s'engage dans une rainure annulaire intérieure (13) du logement (10) et dans une rainure extérieure (41) du tuyau (40) et peut être retiré du logement (10) selon une direction tangentielle aux rainures annulaires (13, 41) par une ouverture (14) dans ce logement et où l'élément d'arrêt (30) peut être prémonté dans la rainure intérieure (31) du logement (10), permettant dans cette position par une déformation élastique l'enfichage du tuyau (40) et s'encliquetant alors dans la rainure extérieure (41) du tuyau (40), **caractérisé en ce que** l'élément d'arrêt (30) est disposé et sécurisé en rotation dans cette position par butée sur une arête (13.1, 14.2) et par accrochage autour d'une arête (14.1).

2. Dispositif d'assemblage selon la revendication 1, **caractérisé en ce que** le secteur de contact du tuyau (40) avec l'élément d'arrêt (30) représente au moins 270°.

3. Dispositif d'assemblage selon l'une des revendications 1 ou 2, **caractérisé en ce que** l'élément d'arrêt (30) est prévu avec une possibilité de torsion sur lui-même et/ou avec des bras d'encliquetage flexibles (32).

4. Dispositif d'assemblage selon la revendication 3, **caractérisé en ce que** les bras d'encliquetage (32) forment une partie oblique à partir d'un élément de base (31) en forme de bande.

5. Dispositif d'assemblage selon la revendication 3, **caractérisé en ce que** l'élément d'arrêt (30) présente une forme en méandres.

6. Dispositif d'assemblage selon la revendication 3, **caractérisé en ce que** l'élément d'arrêt (30) présente une section constante au moins sur la longueur de la zone d'encliquetage.

7. Dispositif d'assemblage selon l'une quelconque des revendications 1 à 6, **caractérisé en ce que** l'élément d'arrêt (30) peut être entièrement enfoncé dans le logement.

8. Dispositif d'assemblage selon l'une quelconque des revendications 1 à 7, **caractérisé en ce que** présente une extrémité épaissie (34) par laquelle il vient en butée sur une arête de l'ouverture (14) du logement dans sa position de prémontage.

9. Dispositif d'assemblage selon l'une quelconque des revendications 1 à 8, **caractérisé en ce que** l'élément d'arrêt (30) présente par rapport à la direction d'insertion, opposée à la direction d'extraction, une extrémité épaissie avant (33) et arrière (34), et **en ce que** le l'ouverture (14) de logement présente par rapport à la direction d'insertion une arête arrière et avant, et **en ce que** l'élément d'arrêt (30) est disposé et sécurisé en rotation dans sa position de prémontage par une butée de son extrémité épaissie arrière (34) sur l'arête avant de l'ouverture (14) de logement et par un accrochage de son extrémité épaissie avant (33) autour de l'arête arrière de l'ouverture (14) de logement.

10. Dispositif d'assemblage selon l'une quelconque des revendications 1 à 8, **caractérisé en ce que** l'élément d'arrêt (30) présente par rapport à la direction d'insertion, opposée à la direction d'extraction, une extrémité avant (33) et arrière (34) et présente un nez d'encliquetage (34.1) formé dans la région de l'extrémité arrière (34), **en ce que** le logement (10) présente une première butée (13.1) à une extrémité de la rainure intérieure (13) et une deuxième butée (14.1) dans la région de l'ouverture (14), et **en ce que** l'élément d'arrêt (30) est sécurisé dans sa position de prémontage avec son extrémité avant (33) sur la première butée (13.1) contre la rotation dans la direction d'insertion, et par accrochage de son nez d'encliquetage autour de, et en particulier derrière, la deuxième butée (14.1) contre la rotation dans la direction d'extraction.

11. Dispositif d'assemblage selon l'une quelconque des revendications 1 à 8, **caractérisé en ce que** l'élément d'arrêt (30) présente par rapport à la direction d'insertion, opposée à la direction d'extraction, une extrémité avant (33) et arrière (34) et un nez d'encliquetage (34.1) dans la région de l'extrémité arrière (34) ainsi qu'un autre nez d'encliquetage (34.4), **en ce que** le logement (10) présente dans la région de l'ouverture (14) une deuxième (14.1) et une troisième (14.2) butée internes, et **en ce que** l'élément d'arrêt (30) est sécurisé dans sa position de prémontage avec son autre nez d'encliquetage (34.4) sur la troisième butée interne (14.2) contre la rotation dans la direction d'insertion, et par accrochage de son précédent nez d'encliquetage autour de, et en particulier derrière, la deuxième butée contre la rotation dans la direction d'extraction.

12. Dispositif d'assemblage selon la revendication 11, **caractérisé en ce que** l'extrémité avant (33) de l'élément d'arrêt (30) présente un écart avec une extrémité (13.2) de la rainure intérieure (13).

13. Dispositif d'assemblage selon l'une quelconque des revendications 10 à 12, **caractérisé en ce que** la sécurisation de l'élément d'arrêt (30) contre la rotation dans la direction d'extraction dans la position de prémontage est obtenue par une torsion de son extrémité arrière (34).

14. Dispositif d'assemblage selon l'une quelconque des revendications 10 à 12, **caractérisé en ce que** la sécurisation de l'élément d'arrêt (30) contre la rotation dans la direction d'extraction dans la position de prémontage est obtenue par une flexion latérale vers l'extérieur de son extrémité arrière (34).

15. Dispositif d'assemblage selon l'une quelconque des revendications 13 ou 14, **caractérisé en ce que** l'élément d'arrêt est prévu dans la région de son extrémité arrière (34) avec une ouverture d'introduction (34.3) pour qu'un outil (80) vienne défaire la sécurisation de l'élément d'arrêt (30) dans la position de prémontage contre la rotation dans la direction d'extraction.

16. Dispositif d'assemblage selon l'une quelconque des revendications 12 à 15, **caractérisé en ce que** l'élément d'arrêt dans sa position de prémontage une partie faisant saillie par rapport au logement (10) et utilisable pour défaire à la main la sécurisation de l'élément d'arrêt (30) dans la position de prémontage contre la rotation dans la direction d'extraction.

17. Dispositif d'assemblage selon les revendications 14 et 16, **caractérisé en ce qu'**il est prévu avec un dispositif d'assistance au mouvement de l'élément d'arrêt (30) lors de son extraction du logement (10) sous la forme d'un cliquet réalisé par la flexion vers l'extérieur de l'extrémité arrière (34) de l'élément d'arrêt (30) entre une languette à ressort (34.5) et d'une surface d'encliquetage (14.3) à échelons multiples.

18. Dispositif d'assemblage selon l'une quelconque des revendications 1 à 17, **caractérisé en ce que** la rainure intérieure (13) est prévue avec un profil arrondi.

19. Dispositif d'assemblage selon l'une quelconque des revendications 1 à 18, **caractérisé en ce qu'**il est prévu avec un joint (20), plus particulièrement un joint plat en forme de manchon ou un joint torique.

20. Dispositif d'assemblage selon la revendication 19, **caractérisé en ce que** le joint (20) est disposé au delà de l'élément d'arrêt (30) dans la direction d'enfichage du tuyau (40).

21. Dispositif d'assemblage selon l'une quelconque des revendications 1 à 20, **caractérisé en ce que** plusieurs éléments d'arrêt (30) sont disposés l'un derrière l'autre.

22. Dispositif d'assemblage selon l'une quelconque des revendications 19 à 21, **caractérisé en ce que** plusieurs joints (20) sont disposés l'un derrière l'autre.

23. Dispositif d'assemblage selon l'une quelconque des revendications 1 à 22, **caractérisé en ce que** les pièces sont réalisées en matière plastique polymère.

24. Utilisation du dispositif d'assemblage selon l'une quelconque des revendications 1 à 23 pour le domaine des tuyaux ondulés de protection de câbles pour le secteur de la construction de machines, ou la robotique, ou les véhicules guidés.

25. Utilisation du dispositif d'assemblage selon l'une quelconque des revendications 1 à 23 pour le domaine des conduits de transport de media pour l'industrie ou la construction automobile.
